# EUROPÄISCHE PATENTSCHRIFT

(11) **EP 0 544 708 B1**
(45) Veröffentlichungstag und Bekanntmachung des Hinweises auf die Patenterteilung: **26.10.1994**
(21) Anmeldenummer: 91914230.7
(22) Anmeldetag: 14.08.1991
(51) Int. Cl.: F16K 7/07

(54) **QUETSCHVENTIL**
PINCH VALVE
ROBINET A MANCHON DEFORMABLE

(30) Priorität: 23.08.1990 DE 9012109 U
(43) Veröffentlichungstag der Anmeldung: 09.06.1993
(73) Patentinhaber: Stanelle, Karl-Heinz, D-74363 Güglingen (DE)
(72) Erfinder: Stanelle, Karl-Heinz, D-74363 Güglingen (DE)
(74) Vertreter: Müller, Hans, Dipl.-Ing.
(86) Internationale Anmeldenummer: DE9100646
(87) Internationale Veröffentlichungsnummer: WO9203676

(56) Entgegenhaltungen:
- DE-U- 8 716 025

## Beschreibung

### TECHNISCHES GEBIET

Die Erfindung betrifft ein Quetschventil für Schüttgüter, Flüssigkeiten oder Gase.

Quetschventile sind Absperrorgane, bei denen durch Zusammendrücken des in ihrem Inneren vorhandenen Schlauches der Durchgang durch das Quetschventil vollständig unterbrochen werden kann. Quetschventile lassen sich relativ schnell schließen und öffnen, so daß sie überall dort eingesetzt werden, wo Rohr- oder Schlauchleitungen mehr oder weniger schlagartig geöffnet bzw. geschlossen werden müssen. Quetschventile können für Schüttgüter wie Beton, Sand, Mehl, Zement, Getreide oder auch für Flüssigkeiten und Gase verwendet werden.

### STAND DER TECHNIK

Die bekannten Quetschventile besitzen ein in Längsrichtung sich erstreckendes etwa rohrförmiges Gehäuse. In dem Gehäuse verläuft in Längsrichtung ein elastischer Schlauch, der über entsprechende Formteile an den beiden stirnseitigen Endbereichen des Gehäuses festgeklemmt ist. Durch Einleiten von Druckluft in den Bereich zwischen dem Schlauch und dem Gehäuse kann der Schlauch zusammengedrückt und somit der Durchgang durch das Quetschventil unterbrochen werden. Dabei verformt sich der Schlauch im mittleren Bereich des Gehäuses nach zwei Seiten, weshalb das Gehäuse die dadurch entstehende Querschnittsverbreiterung zulassen muß.

Es sind Quetschventile bekannt, bei denen ihr Gehäuse einen etwa kugelförmig ausgewölbten mittleren Bereich aufweist. Die Kugelform ist der Querschnittsverbreiterung des Schlauches im mittleren Bereich des Quetschventils angepaßt.

Eine mittlere Auswölbung besitzt auch das Gehäuse des gattungsbildenden, aus dem deutschen Gebrauchsmuster DE-U-87 16 025 bekannten Quetschventils. Die Auswölbung ist im Querschnitt allerdings nicht kreisförmig ausgebildet sondern besitzt in etwa die Form einer Raute mit stark abgerundeten Ecken. Mit dieser sich an den nicht verformten Schlauch möglichst anschmiegenden Form soll die zum Zusammendrücken des Schlauches benötigte Luftmenge klein gehalten werden und trotzdem die erforderliche Querschnittsverbreiterung des Schlauches zugelassen werden. Aus Gründen einer Gewichtsreduzierung des Gehäuses und um größenmäßig der Normgröße von Anschlußflanschen angepaßt zu sein, besitzt das Gehäuse in seinen beiden den stirnseitigen Flanschen benachbarten Bereichen jeweils einen möglichst kleinen Innendruchmesser und daher eine gegenüber dem mittleren Bereich umlaufende Einschnürung.

Für jeden Schlauchdurchmesser ist ein dem jeweiligen Schlauch entsprechend angepaßtes Gehäuse erforderlich. Die Gehäuse müssen infolge ihrer unregelmäßigen Form als Gußstücke hergestellt werden. Derartige Quetschventile funktionieren einwandfrei. Allerdings sind ihre Herstellkosten recht hoch, was auf die recht aufwendige Form ihres Gehäuses zurückzuführen ist.

### DARSTELLUNG DER ERFINDUNG

Ausgehend von diesem Stand der Technik liegt der Erfindung die Aufgabe zugrunde, ein Quetschventil der eingangs genannten Art anzugeben, das technisch einwandfrei funktioniert und darüberhinaus wirtschaftlich einfach und damit kostengünstig hergestellt werden kann.

Diese Erfindung ist für das aus dem Stand der Technik bekannte Quetschventil durch die Merkmale des Anspruchs 1 gegeben.

Das danach bekannte Quetschventil zeichnet sich dadurch aus, daß der Querschnitt seines Gehäuses über die gesamte Länge zwischen den Formteilen, die an den beiden stirnseitigen Endbereichen des Gehäuses vorhanden sind, in Längsrichtung konstant groß ist. Damit kann sich ein vollständig zusammengequetschter Schlauch längs dieser zumindest einen Innendiagonale gradlinig in dem Gehäuse ausrichten. Im nicht zusammengequetschten Zustand weist der Schlauch einen konstanten Abstand von der Innenwandung des Gehäuses auf. Ein derartiges Gehäuse läßt sich sehr einfach herstellen. So können auf dem Markt befindliche Norm-Bauteile wie z. B. Rechteckrohre, Ovalrohre oder Rohre mit quadratischem oder rhombusartigem Querschnitt verwendet werden. Entsprechend dem Kreisdurchmesser des Schlauches kann so ohne Probleme das entsprechend große Rohr ausgesucht und verwendet werden. Statt des Rechteckrohres kann auch ein im Querschnitt kreisrundes Rohr mit einem entsprechend großen Kreisquerschnitt verwendet werden. Während sich beim Rechteck- bzw. Quadratrohr der Schlauch immer längs einer bestimmten Diagonale zusammenlegen wird und die Schließstellung damit lagemäßig vorbestimmt ist, ist dies beim Kreisrohr nicht der Fall. Allerdings wird sich auch hier der Schlauch in etwa immer in gleicher Richtung zusammenlegen, da er beim erstmaligen Zusammenlegen an seinen maximalen Biegestellen wenn auch geringfügig plastisch verformt wird, so daß sich immer die gleichen Biegestellen und damit die gleiche Quetschstellung des Schlauches einstellen wird. Derartige Quetschventile haben den weiteren Vorteil, daß keine aufwendigen Werkzeugkosten oder Gußmodelle im Zusammenhang mit dem Herstellen des Gehäuses erforderlich werden. Dies gilt auch dann, wenn das Quetschventil aus hochwertigen Materialien wie z. B. Edelstahl hergestellt werden muß; Quadratrohre und sonstige regelmäßige Querschnitte aufweisende Gehäuse sind auch in Edelstahl problemlos und ohne großen Aufwand serienmäßig zu bekommen.

Eine wirtschaftlich sehr vorteilhafte Ausführungsform eines derartigen Quetschventils zeichnet sich dadurch aus, daß an jeder Stirnseite des Gehäuses eine Ringscheibe befestigt ist, wobei die zentrale Öffnung dieser Ringscheibe einen Durchmesser aufweist, der in etwa dem Kreisdurchmesser des Schlauches entspricht. Eine zweite Ringscheibe ist flächig auf der ersten Ringscheibe beispielsweise über eine Schraubverbindung befestigt. Der jeweilige stirnseitige Endbereich des Schlauches läßt sich dann zwischen diesen beiden Ringscheiben einklemmen und somit unverrückbar aber doch demontierbar befestigen. Durch entsprechende konisch ausgebildete Schrägflächen der beiden Ringscheiben läßt sich die Quetschrichtung nicht parallel zur Längsrichtung, sondern schräg zu derselben anordnen, so daß die auf den Schlauch beim Quetschen einwirkenden Druckkräfte beliebig klein bzw. beliebig groß vorbestimmt werden können. An der inneren Ringscheibe kann dann ferner über eine Schweißnaht das beispielsweise Rechteckrohr sehr einfach befestigt werden. Diese Ringscheibe kann aus einem handelsüblichen Flansch hergestellt werden. Durch die Verwendung eines entsprechenden Norm-Bauteils lassen so sich die Herstellkosten weiter senken.

Weitere Ausgestaltungen und Vorteile der Erfindung sind den in den Ansprüchen weiterhin aufgeführten Merkmalen sowie dem nachfolgenden Ausführungsbeispiel zu entnehmen.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig.1: eine Schnittdarstellung von der oberen Hälfte eines Quetschventils und
- Fig. 2: eine Draufsicht auf das Quetschventil gemäß Fig. 1.

### WEGE ZUR AUSFÜHRUNG DER ERINDUNG

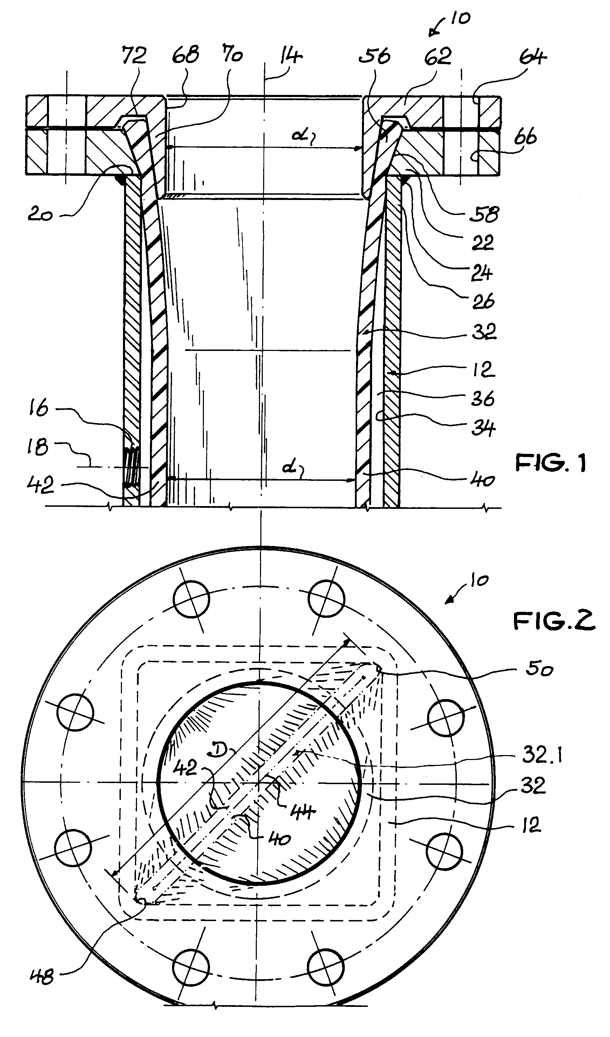

In Fig. 1 ist eine Quetschventil 10 lediglich mit seinem oberen hälftigen Bereich dargestellt. Dieses Quetschventil 10 besitzt ein Gehäuse, das im vorliegenden Beispielsfall aus einem Quadratrohr 12 besteht. Die Längsachse dieses Quadratrohres 12 fällt mit der Längsachse 14 des Quetschventils 10 zusammen.

In der Mitte des Quadratrohres 12 ist eine Bohrung 16 vorhanden, die ein Innengewinde aufweist. Durch diese Bohrung 16 kann über ein nicht dargestelltes Ventil Druckluft in das Innere des Gehäuses eingeleitet werden. Bezüglich der Bohrungsachse 18 dieser Bohrung 16 ist das Quetschventil 10 klappsymmetrischausgebildet.

Auf der oberen Stirnseite 20 des Quadratrohres 12 liegt ein DIN-Flansch 22 zentrisch auf, der über eine umlaufende Schweißnaht 24 an dem entsprechenden Endbereich 26 des Quadratrohres 12 befestigt ist. In entsprechender Weise ist an dem in Fig. 1 nicht dargestellten unteren Ende des Quadratrohres 12 ebenfalls ein entsprechender DIN-Flansch 22 vorhanden.

Im Inneren des Quadratrohres 12 ist ein Schlauch 32 vorhanden, der einen gewissen Abstand von der Innenseite 34 des Quadratrohres 12 aufweist. Im mittleren Bereich des Quadratrohres 12 besitzt dieser Schlauch 32 einen Kreisdurchmesser d. Der Kreisdurchmesser d bezieht sich dabei auf den nicht verformten, im Querschnitt kreisrunden Schlauch 32.

In den Innenzwischenraum 36, der zwischen dem Schlauch 32 und der Innenseite 34 des Quadratrohres 12 vorhanden ist, kann durch die Bohrung 16 Druckluft eingeleitet werden. Bei entsprechend großem Druck in dem Innenzwischenraum 36 wird sich der Schlauch 32 im Bereich der Bohrungsachse 18, d. h. im mittleren Bereich des Quadratrohres 12, mit seinen beiden gegenüberliegenden Wandbereichen 40, 42 flächig aufeinanderlegen, wobei die gemeinsame Berührungsfläche 44 in etwa eine Ebene darstellt. Diese Berührungsfläche erstreckt sich längs der Innendiagonale D des Quadratrohres 12. Der so vollständig zusammengequetschte Schlauch ist in Fig. 2 strichpunktiert mit dem Bezugszeichen 32.1 dargestellt. Der Schlauch 32.1 besitzt im Bereich seiner Berührungsfläche 44 eine Ausdehnung, die in etwa der Innendiagonalen D entspricht. In seinen maximal gekrümmten Bereichen 48, 50 wird sich der Schlauch 32.1 um ein gewisses Maß plastisch verformen, so daß der Schlauch in seinem zusammengequetschten Zustand immer wieder diese in Fig. 2 dargestellte Position einnehmen wird.

Mit seinem stirnseitigen Endbereich 56 liegt der Schlauch 32 an einer schrägen Innenwandung 58 des Flansches 22 an. Diese Innenwandung, die eine zentrische Aussparung einrahmt, verbreitert sich nach außen, in Fig. 1 nach oben hin.

Auf dem Flansch 22 liegt ein weiterer Flansch 62 auf, der mehrere Durchbohrungen 64 aufweist. Die Längsachsen dieser Bohrungen 64 fluchten mit Bohrungen 66, die in dem darunterliegenden Flansch 22 vorhanden sind. Mittels Schrauben, die durch eine Gruppe der Bohrungen 64, 66 hindurchgeführt werden, lassen sich die beiden Flansche fest aneinander befestigen.

An dem äußeren Flansch 62 ist eine mittige Aussparung 68 mit einem Kreisdurchmesser d vorhanden. Das Maß d entspricht dabei etwa dem Innenkreisdurchmesser d des unverformten Schlauches 32 im bezüglich der Längsachse 14 mittleren Bereich des Quadratrohres 12.

Im Bereich der mittigen Aussparung 68 ist an dem äußeren Flansch 62 ein umlaufender Kragen 70 einstückig angeformt. Dieser Kragen 70 erstreckt sich in Längsrichtung in das Quetschventil 10 hinein, wobei es unterhalb der Stirnseite 20 des Quadratrohres 12 endet. Zwischen diesem Kragen 70 und der konischen Wand 58 des inneren Flansches 22 wird im zusammengeschraubten Zustand der beiden Flansche 22, 62 der obere Endbereich 56 des Schlauches 32 eingeklemmt. Der Schlauch 32 ist damit an seinem einen Ende unverrückbar zwischen den beiden Flanschen gehalten. Für sein entgegengesetztes Ende gilt Vergleichbares.

In dem äußeren Flansch 62 ist benachbart zum Kragen 70 eine umlaufende Nut 72 eingeformt. In diese Nut 72 können sich beim Zusammenquetschen des Endbereiches 56 des Schlauches 32 Teile des Schlauches hineinverformen.

Aufgrund der Verwendung von Normflanschen 22, die lediglich im Bereich ihrer mittigen Aussparung konisch ausgedreht werden, deren Außenabmessungen aber unverändert bleiben können, kann ein derartiges Quetschventil 10 problemlos in vorhandene Rohrleitungen eingebaut werden. Die Befestigung an dem Rohrleitungssystem erfolgt über diejenigen Bohrungen 64 und 66, die noch frei zur Verfügung stehen und nicht zum gegenseitigen Verschrauben der beiden Flansche 64, 66 benötigt werden. Im vorliegenden Beispielsfall sind von den vorhandenen acht Bohrungen 64 bzw. 66 etwa vier zum gegenseitigen Verschrauben der beiden Flansche 64, 66 benutzt, so daß noch weitere vier Bohrungen zum Befestigen des Quetschventils 10 an sich anschließenden Rohren zur Verfügung stehen.

Statt des Quadratrohres können auch sonstige DIN-Hohlkörper verwendet werden. Wichtig ist nur, daß sie einen Innendurchmesser bzw. eine Innendiagonale D aufweisen, der etwa dem halben Kreisumfang des verwendeten Schlauches entspricht. Auch wäre es möglich, das Quadratrohr bzw. das sonstige Gehäuse aus zwei oder mehreren Teilprofilen zusammenzusetzen. So könnten statt des einteiligen Quadratrohres 12 auch zwei entsprechend große U-Profile so zusammengefügt werden und entsprechend verschweißt werden, daß in ihrem Inneren der vorstehende Quadrat- bzw. Rechteckquerschnitt mit der Innendiagonale D erzeugt wird.

Sofern gewünscht, kann das Gehäuse 12 problemlos aus jedem beliebigen Werkstoff und so beispielsweise auch aus Edelstahl hergestellt sein. Dies gilt in gleicher Weise auch für den DIN-Flansch 22 und die sonstigen Bauteile.

## Patentansprüche

1. Quetschventil (10), mit
- einem in Längsrichtung (14) sich erstreckenden etwa rohrförmigen Gehäuse (12),
- einem in dem Gehäuse (12) vorhandenen elastischen Schlauch (32),
- Formteilen (22, 62) an den beiden stirnseitigen Endbereichen des Gehäuses (12), mit denen die Schlauchenden in den beiden stirnseitigen Endbereichen (26) des Gehäuses (12) festklemmbar sind,
- einem Gehäusequerschnitt in seinem Mittelteil, dessen zumindest eine Innendiagonale (D) etwa dem halben Querschnittsumfang des Schlauches (32) entspricht,
**dadurch gekennzeichnet,** daß
- der Querschnitt des Gehäuses (12) über die gesamte Länge zwischen den Formteilen (22, 62) in Längsrichtung (14) konstant groß ist.

2. Quetschventil nach Anspruch 1,
**dadurch gekennzeichnet,** daß
- das rohrförmige Gehäuse ein Rechteckrohr (12) ist, dessen eine Innendiagonale (D) etwa dem halben Querschnittsumfang des Schlauches (32) entspricht.

3. Quetschventil nach Anspruch 2,
**dadurch gekennzeichnet,** daß das Rechteckrohr ein Quadratrohr (12) ist.

4. Quetschventil nach Anspruch 1,
**dadurch gekennzeichnet,** daß
- an jeder Stirnseite (20) des Gehäuses (12) eine Ringscheibe (22) mit einer zentralen Öffnung befestigt ist,
- eine zweite Ringscheibe (62) flächig auf der ersten Ringscheibe (22) aufliegt,
- die zentrale Öffnung (68) dieser Ringscheibe (62) einen Durchmesser (d) aufweist, der in etwa dem Kreisdurchmesser (d) des Schlauches (32) entspricht,
- der jeweilige stirnseitige Endbereich (56) des Schlauches (32) zwischen den beiden Ringscheiben (22, 62) einklemmbar ist.

5. Quetschventil nach Anspruch 4,
**dadurch gekennzeichnet,** daß
- die umlaufende Wandung (58) der Öffnung der ersten Ringscheibe (22) sich in Längsrichtung (14) des Gehäuses (12) nach außen konisch erweitert,
- die umlaufende Wandung der Öffnung der zweiten Ringscheibe einen in Längsrichtung (14) des Gehäuses (12) nach innen auskragenden, umlaufenden Kragen (70) aufweist,
- der Endbereich (56) des Schlauches (32) zwischen dem Kragen (70) und der konischen Erweiterung (58) einklemmbar ist.

6. Quetschventil nach Anspruch 5,
**dadurch gekennzeichnet,** daß
- in der der ersten Ringscheibe (22) zugewandten Ringfläche der zweiten Ringscheibe (62) eine Ringnut (72) vorhanden ist, die um den umlaufenden Kragen (70) um läuft.

7. Quetschventil nach Anspruch 4,
**dadurch gekennzeichnet,** daß
- die beiden Ringscheiben (22, 62) in Längsrichtung (14) des Gehäuses (12) übereinanderliegende Aussparungen (64, 66) besitzen, durch die hindurch die beiden Ringscheiben (22, 62) miteinander verschraubbar sind.

8. Quetschventil nach Anspruch 7,
**dadurch gekennzeichnet,** daß
- die beiden Ringscheiben (22, 62) weitere, in Längsrichtung übereinanderliegende Aussparungen (64, 66) besitzen, die außerhalb des Lichtraumprofils des Gehäuses (12) vorhanden sind.

## Claims

1. Pinch valve (10), having
- an approximately tubular casing (12) extending in the longitudinal direction (14),
- an elastic hose (32) disposed in the casing (12),
- shaped parts (22, 62) in the two end face regions of the casing (12), whereby the ends of the hose can be clamped fast in the two end face regions (26) of the casing (12),
- in its middle part a casing cross-section whose at least one internal diagonal (D) corresponds approximately to half the cross-sectional periphery of the hose (32),
characterized in that
- the cross-section of the casing (12) has a constant size in the longitudinal direction (14) over the entire length between the shaped parts (22, 62).

2. Pinch valve according to Claim 1, characterized in that
- the tubular casing is a rectangular tube (12) whose one internal diagonal (D) corresponds approximately to half the cross-sectional periphery of the hose (32).

3. Pinch valve according to Claim 2, characterized in that the rectangular tube is a square tube (12).

4. Pinch valve according to Claim 1, characterized in that
- on each end face (20) of the casing (12) an annular disc (22) having a central opening is fastened,
- a second annular disc (62) lies flat on the first annular disc (22),
- the central opening (68) of said annular disc (62) has a diameter (d) which corresponds approximately to the circle diameter (d) of the hose (32),
- the respective end face region (56) of the hose (32) can be clamped between the two annular discs (22, 62).

5. Pinch valve according to Claim 4, characterized in that
- the circumferential wall (58) of the opening in the first annular disc (22) is conically widened outwardly in the longitudinal direction (14) of the casing (12),
- the circumferential wall of the opening in the second annular disc has a circumferential collar (70) projecting inwards in the longitudinal direction (14) of the casing (12),
- the end region (56) of the hose (32) can be clamped between the collar (70) and the conical widening (58).

6. Pinch valve according to Claim 5, characterized in that
- in that annular face of the second annular disc (62) which faces the first annular disc (22) an annular groove (72) is provided which extends around the circumferential collar (70).

7. Pinch valve according to Claim 4, characterized in that
- the two annular discs (22 and 62) have cutouts (64, 66) which lie one above the other in the longitudinal direction (14) of the casing (12) and through which the two annular discs (22, 62) can be screwed to one another.

8. Pinch valve according to Claim 7, characterized in that
- the two annular discs (22, 62) have additional cutouts (64, 66) which lie one above the other in the longitudinal direction and which are situated outside the clearance profile of the casing (12).

## Revendications

1. Robinet (10) à manchon déformable, comprenant
- un carter (12) sensiblement tubulaire, s'étendant dans le sens longitudinal (14),
- une garniture souple (32) élastique, présente dans le carter (12),
- des pièces profilées (22, 62) situées aux deux régions extrêmes frontales du carter (12), et par lesquelles les extrémités de la garniture souple peuvent être fermement coincées dans les deux régions extrêmes frontales (26) du carter (12),
- dans sa partie moyenne, une section transversale de carter dont au moins une diagonale intérieure (D) correspond sensiblement au demi-périmètre de la section de la garniture souple (32),
caractérisé par le fait que
- la section transversale du carter (12) est constante sur toute la longueur, dans le sens longitudinal (14), entre les pièces profilées (22, 62).

2. Robinet à manchon déformable, selon la revendication 1,
caractérisé par le fait que
- le carter tubulaire est un tube rectangulaire (12), dont une diagonale intérieure (D) correspond sensiblement au demi-périmètre de la section transversale de la garniture souple (32).

3. Robinet à manchon déformable, selon la revendication 2,
caractérisé par le fait que le tube rectangulaire est un tube carré (12).

4. Robinet à manchon déformable, selon la revendication 1,
caractérisé par le fait
- qu'un disque annulaire (22), percé d'une ouverture centrale, est fixé à chaque face extrême (20) du carter (12),
- qu'un second disque annulaire (62) repose à plat sur le premier disque annulaire (22),
- que l'ouverture centrale (68) de ce disque annulaire (62) présente un diamètre (d) correspondant sensiblement au diamètre (d) de la circonférence de la garniture souple (32),
- que la région extrême frontale considérée (56) de la garniture souple (32) peut être coincée entre les deux disques annulaires (22, 62).

5. Robinet à manchon déformable, selon la revendication 4,
caractérisé par le fait que
- la paroi périphérique (58) de l'ouverture du premier disque annulaire (22) s'évase tronconiquement, vers l'extérieur, dans le sens longitudinal (14) du carter (12),
- la paroi périphérique de l'ouverture du second disque annulaire présente une collerette circonférentielle (70) saillant, vers l'intérieur, dans le sens longitudinal (14) du carter (12),
- la région extrême (56) de la garniture souple (32) peut être coincée entre la collerette (70) et l'évasement tronconique (58).

6. Robinet à manchon déformable, selon la revendication 5,
caractérisé par le fait
- qu'une gorge annulaire (72), s'étendant périphériquement autour de la collerette circonférentielle (70), est ménagée dans la surface annulaire du second disque annulaire (62) qui est tournée vers le premier disque annulaire (22).

7. Robinet à manchon déformable, selon la revendication 4,
caractérisé par le fait que
- les deux disques annulaires (22, 62) possèdent, dans le sens longitudinal (14) du carter (12), des évidements superposés (64, 66) à travers lesquels les deux disques annulaires (22, 62) peuvent être boulonnés l'un à l'autre.

8. Robinet à manchon déformable, selon la revendication 7,
caractérisé par le fait que
- les deux disques annulaires (22, 62) possèdent d'autres évidements (64, 66) superposés dans le sens longitudinal, situés à l'extérieur du profil interne du carter (12).
